# EUROPEAN PATENT APPLICATION

(11) **EP 3 447 698 A1**
(43) Date of publication of application: **27.02.2019**
(21) Application number: 18170423.0
(22) Date of filing: 02.05.2018
(51) Int. Cl.: G06Q 10/08, G06Q 30/00

(54) **PLANOGRAM IMPLEMENTATION**

(30) Priority: 25.08.2017 US 201715686890; 27.10.2017 EP 17199055
(71) Applicant: Vocollect, Inc., Pittsburgh, PA 15235 (US)
(72) Inventor: HENDRICKSON, James, Morris Plains, NJ New Jersey 07950 (US); PIKE, Lori, Morris Plains, NJ New Jersey 07950 (US); OUDARD, Cedric, Morris Plains, NJ New Jersey 07950 (US); DI SANTO, Giovanni, Morris Plains, NJ New Jersey 07950 (US); VOLZ, Justin, Morris Plains, NJ New Jersey 07950 (US)
(74) Representative: Houghton, Mark Phillip

(57) **Abstract**

A compliance method involves, for example, storing actual product placement data describing a display arrangement of actual product placements; at one or more programmed processors: comparing the actual product placement data with planned product placement as defined in a planogram; creating a set of one or more instructions for rearrangement of the actual product placement to bring the actual product placement in the display arrangement into compliance with the planned product placement as defined in the planogram; and outputting the set of instructions.

## Description

### FIELD OF THE INVENTION

The present invention relates to auditing product displays and implementing planograms in product displays into compliance with associated planograms.

### BACKGROUND

Retail product displays are often governed by a planogram. A planogram is a diagram or other representation of the planned placement of products on shelves and has the objective of providing an optimal and uniform presentation of goods across retail outlets. Hence, retailers build displays that comply with these predetermined planograms. These planograms allow stores to maintain consistent look and feel and permit the stores to employ environmental design concepts to maximize sales. In some cases, stores are contractually obligated to ensure that vendors have and maintain specific shelf space. If vendors are not provided the contractually obligated shelf space the store can be fined for non-compliance. Complying with a planogram can also be tied to maintaining inventory levels thus ensuring that customers are able to purchase products because they are in stock.

Maintaining the displays in compliance with the planograms often takes substantial effort. The current process calls for too much cognitive load in order for workers to relocate products to the correct location. As a result, the standard operating procedure is often for all products in a given planogram to be un-shelved and the display to be rebuilt when there is a significant discrepancy. Therefore, a need exists for a mechanism to enhance the efficiency of this process. More specifically, it is often the case that inventory may not be available, such as where new product has yet to be received or current product has been sold out. Further, since the operation is carried out manually there are issues regarding repeated lifting and manual handling constraints. Further, the implementation of planogram should be carried out so as to optimize the work effort and time in carrying out the process.

### SUMMARY

Accordingly, in one aspect, the present invention provides methods and apparatus for conducting an audit of a display for compliance with a planogram and implementing a planogram, particularly in adding a worker to do so more efficiently.
The present invention provides a number of method steps to be calculated using a processor, for example in a computer system. The method steps, for example the instructions, may then be carried out manually or with manual assistance. Method steps of the present invention are intended to be used in combination.

A method of the present invention is a method for implementing or assisting in the implementation of a planogram of product placement for providing a shelf facing representing that planogram, wherein the method involves providing a processing system, such as a computer, the processing being configures to carry out in whole or part the steps of: obtaining a planogram, auditing a display arrangement to generate actual product placement data representing actual product placement in the display arrangement; comparing the actual product placement data with planned product placement as defined in a planogram; creating a set of one or more instructions for rearrangement of the actual product placement to bring the actual product placement in the display arrangement into compliance with the planned product placement as defined in the planogram; and outputting the set of instructions.

The step of obtaining the planogram is preferably carried out using the method steps of:
Obtaining a visual image of the intended shelf facing (the planogram), and analysing or being provided with information as to the identity of the products present in that intended shelf facing. The present description a product is defined as a stock keeping unit(SKU) and may provide, for example, a single box, that single box potentially itself comprising subunits of separately saleable product. The processor preferably analyses that visual image of the planogram to identify the products and their placement. The analysis is preferably made in comparison to a database of product images. The database preferably includes the Pantone ® colour references of the main colours used on the product and the product manufacturers and product categories. This has the advantage of identify mistakes or mismatches in the Planogram between product presented and actual product in stock. This can save considerable time and effort in workers trying to implement a planogram which is inherently flawed.

The step of auditing a display arrangement to generate actual product placement data representing actual product placement in the display arrangement is preferably carried out using the method steps of:
Obtaining an image of the actual product placement, preferably in the form of a photograph of a shelf facing to be updated according to a planogram. The processor then preferably analyses that photograph to identify the current product placement. The analysis is preferably made in comparison to a database of product images. The database preferably includes the Pantone® colour references of the main colours used on the product and the product manufacturers and product categories.

The present invention include steps where images of products are compared, this comparison by the processor is carried out using known image comparison techniques. This automation of the process has the advantage of avoiding the subjective use of individual workers, particularly if the individual workers have sight problems. The image comparison techniques used preferably primarily compare colour, the area of colour and the mix of colours is the objective of the planogram is to provide a given visual appearance which has the technical effect of increased purchase by consumers as planograms are set up using careful psychological analysis to optimise triggers to the consumer to purchase product. The technical effect of the planogram is therefore more effectively conveyed by use of the present invention than any equivalent method carried out by an individual worker.

In certain example embodiments, the set of instructions is output as synthesized speech instructions. In certain example embodiments, at least one of the instructions comprises an instruction to add product at a specified location in the display arrangement. In certain example embodiments, at least one of the instructions comprises an instruction to shift a product at a specified location in the display arrangement to the left or to the right. In certain example embodiments, at least one of the instructions comprises an instruction to remove a product at a specified location in the display arrangement. In certain example embodiments, the comparing involves a product check of the audit data to identify unknown or missing products. In certain example embodiments, the comparing involves a facings check that compares relative quantities of actual product facings with planned product facings. In certain example embodiments, the comparing involves a slot check that checks to see if products are shifted to the left or right of planned product placement.

Another example method involves: storing actual product placement data describing a display arrangement of actual product placements; at one or more programmed processors: comparing the actual product placement data with planned product placement as defined in a planogram; creating a set of one or more instructions for rearrangement of the actual product placement to bring the actual product placement in the display arrangement into compliance with the planned product placement as defined in the planogram; and outputting the set of instructions.

The set of instructions are stored as ordered instructions in an instruction stack and where outputting the instruction stack involves outputting the instructions in a specified order. The set of instructions is preferably output as synthesized speech instructions. At least one of the instructions involves an instruction to add product at a specified location in the display arrangement. At least one of the instructions may comprises an instruction to shift a product at a specified location in the display arrangement to the left or to the right. At least one of the instructions may comprise an instruction to remove a product at a specified location in the display arrangement. The comparing involves a product check of the audit data to identify unknown or missing products. The comparing involves a facings check that compares relative quantities of actual product facings with planned product facings. The comparing may involve a slot check that checks to see if products are shifted to the left or right of planned product placement.

The method involves: obtaining and storing actual product placement data describing a display arrangement of actual product placements; at one or more programmed processors: comparing the actual product placement data with planned product placement as defined in a planogram; creating a set of one or more instructions for rearrangement of the actual product placement to bring the actual product placement in the display arrangement into compliance with the planned product placement as defined in the planogram; where the instructions comprise one or more of the following: an instruction to add product at a specified location in the display arrangement, an instruction to shift a product at a specified location in the display arrangement to the left or to the right, and an instruction to remove a product at a specified location in the display arrangement; and outputting the set of instructions.

The step of comparing the actual product placement data with planned product placement as defined in a planogram is now described in more detail as the following preferred features, which may be combined.

In one preferred feature of the present invention the one or more instructions for rearrangement of the actual product placement to bring the actual product placement in the display arrangement into compliance with the planned product placement as defined in the planogram (the instructions) compiled by the processor using the following step:

Comparing the planogram information as to the identity of the products present in that intended shelf facing with the actual product placement product placement data, such as described above and calculating a series of operations to implement the intended product placement. The nature of the operations are illustrated as set out in the detailed description below, as a sub set, to provide detail, of the method described herein.

In another preferred feature of the present invention the one or more instructions for rearrangement of the actual product placement to bring the actual product placement in the display arrangement into compliance with the planned product placement as defined in the planogram (the instructions) compiled by the processor using the following step: obtaining data as to the sales of product on each facing of the Planogram in calculating the number of items necessary to maintain the shelf facing in conformance with the planogram and providing instruction to provide only that number of items. To illustrate, most products are provided in multiple instances behind the front facing. It is therefore counterproductive to move or replace all the products at a given facing when the product at the back of the facing may never require accessing. More preferably the facing only comprises the number of products required, or likely to be required, in a given time period until the next shelf inspection. This saves a considerable amount of time. More preferably in addition or in the alternative, the instructions provide that the shelf facing be backed by only the number of products predicted to be sold in the given time period. This has the advantage that products which are sold infrequently, but for example may be perishable, are not stopped to such a depth on the shelf that product will be wasted. This has the further advantage that the worker implementing the planogram does not need to manually move more items are necessary.

In a preferred embodiment of the present invention the or more instructions for rearrangement of the actual product placement to bring the actual product placement in the display arrangement into compliance with the planned product placement as defined in the planogram (the instructions) compiled by the processor using the following steps:
Comparing the products on the planogram with current store inventory and identifying items in the planogram for which product is not available. For each unavailable product identifying the product category (for example household goods, food et cetera) and the source of the product (for example a given brand). Comparing the appearance of the product facing is presented on the planogram with stored images of products in the same product category and preferably the same source of product which are in the current store inventory and adding instruction to the instructions to obtain those alternative products. Preferably the comparison utilises the Pantone® references of the product colours so as to provide an absolute colour reference for the comparison. The comparison preferably utilises the predominant colour of the product optionally in combination with other product colours using an image matching algorithm. This has the benefit of overcoming the logistic issue of product unavailability whilst maintaining the overall objective of providing a given visual appearance for the shelf facings. It also has the advantage that subjective comparisons by a worker, given that workers may for example be colour blind, and the effect of comparing products on shelf in store with product in a storeroom under different lighting conditions is avoided therefore the technical outcome of a given visual appearance when given products not available can be more efficiently achieved using a computational method of the present invention.

In the present invention the outputting the set of instructions preferably comprises the steps:
The set of instructions is output as synthesized speech instructions, this leaves both hands of an operative free to more safely lift and shift goods as part of implementing the method.

The outputting the set of instructions may comprise outputting an image of the shelf facing on a display and placing a cursor or other indicia, such as an icon, at a position described in a synthesized speech instructions. This has been found to be particularly beneficial as verbal instructions can often be misunderstood and the visual cues save considerable time in identifying where actions are required for a manual operator. This is particularly so where the operator may be receiving instruction not in their first language, may be in a noisy environment or may have a hearing impairment. It has been found that a combination of visual and aural instruction is more time efficient in conveying instruction to a worker using the invention than visual or oral/aural instruction alone.
As examples, the instruction to 'move product X from the next to bottom shelf', could be thought of as laterally next to or next upward, providing ambiguity. The phrases such as 'the penultimate shelf' may simply not be understood by some workers.

The comparing preferably involves: a product check of the audit data to identify unknown or missing products; a facings check that compares relative quantities of actual product facings with planned product facings; and a slot check that checks to see if products are shifted to the left or right of planned product placement. The instructions are preferably weighted to such that the option to shift product left or right, even if it gives rise to a higher overall number of operations, which is counterintuitive to the human user, is given preference over remove and replace instruction. This reduces the amount of manual lifting required and reduces the physical demands on a worker using the invention and hence reduces the chances of injury or accident.

In a further feature of the present invention the instructions preferably comprise instructions to refresh the image of the shelf facing and to re-analyses and provide the instructions afresh. The frequency of this instruction is preferably proportional to the complexity of the instructions.

In a further embodiment of the present invention there is provided a planogram implementation system, the system comprising a camera, such as a camera mounted in store, for example in the manner of a security camera, that is directed or is directable upon the product facings for capturing the image of the actual product placement. The system then takes the image in conjunction with the planogram and executes the method of the present invention as herein described on a periodic basis, for example every 5 minutes, every 30 minutes or every hour. The system then determines when the product facings no longer correspond to the planogram and at that point or at a point where a predetermined plurality of mismatches with the planogram occurs issues an instruction to a stock keeping system, such as an automated in-store system, to provide product (stock keeping units) to replenish the shelves as necessary and/or to provide instructions (of the form herein described) to restore the shelf facings to the planogram. This is advantageous as replacing shelves based upon goods checked out of a store is not reliable and does not take into account the movement of product on shelves by customers. The shelves are therefore kept in conformance with the planogram and therefore the technical effect of providing a display having the largest psychological impact on customers and hence increasing sales and therefore product turnover is maintained.

The system preferably an alert that a product is available and the instructions are available for execution when indicia of activity in the store falls below a given threshold. For example, when footfall, such as detected by in and out sensors falls below a given value or when activity at manned checkouts falls below a given level. This optimizes staff utilization as workers can be redirected to specific locations to refresh planogram implementations.

The system instruction to a stock keeping system to provide product to replenish the shelves may comprise an automated product picking procedure to provide a product compilation suitable for refreshing the planogram implementation. This speeds up manual shelf (i.e. planogram) replenishment and as it provides only the required product it has the effect of reduced permutation of actions available to a worker and thus reduced complexity and thereby increases implementation speed and reduces worker fatigue.

The system may comprising a mobile unit configured to traverse the aisles of a store and to sequentially compare actual product facing with planograms and to compile the instructions for a plurality of planograms. This optimizes implementation as only facing exceeding a given threshold of non-compliance can be identified and actioned together.

The system may be housed in a mobile unit.

The system may comprise voice recognition of questions and queries from a user.

The system may enable the user to over-ride instructions.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 depicts a reference display arrangement used for the examples processes discussed.
Figure 2 is an example of a flow chart of an example compliance process consistent with certain embodiments.
Figure 3 is an example of a flow chart depicting a product check process consistent with certain embodiments.
Figure 4 is an example of a flow chart depicting a facing check process consistent with certain embodiments.

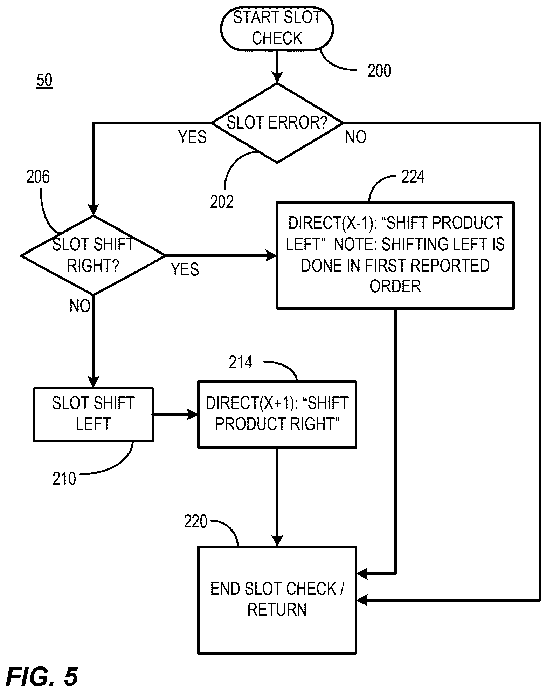

Figure 5 is an example of a flow chart depicting a slot check process consistent with certain embodiments.
Figure 6 is an example of a system for carrying out the processes described in the flow charts.

### DETAILED DESCRIPTION

The present invention provides a system and method for conducting a voice directed planogram logic audit. The system is provided with possible(available) and actual facings/empties related to a product in addition to its relative order on the shelf, during an audit, and is stored as the actual/recorded planogram data in the system. The product related facings can be input either by voice, keypad, or scan. Further, the system compares the possible and actuals with the relative order to the applicable planogram from the customer. A corresponding compliance task to fix the planogram items out of compliance is created from the identified comparison. An output of the system provides a directed assignment to a user/assessor to shift or move the products in order to correct errors in product placement. The system and process are sometimes referred to as a "detect and direct" compliance system and process herein.

For purposes of this document, the term 'planogram' means a diagram or other representation (e.g., a matrix, a table or chart) of the planned (and thus the expected) placement of products on display shelves. The planogram is preferably in the form of a graphic representation, e.g. a picture, of the intended appearance of product on shelves.

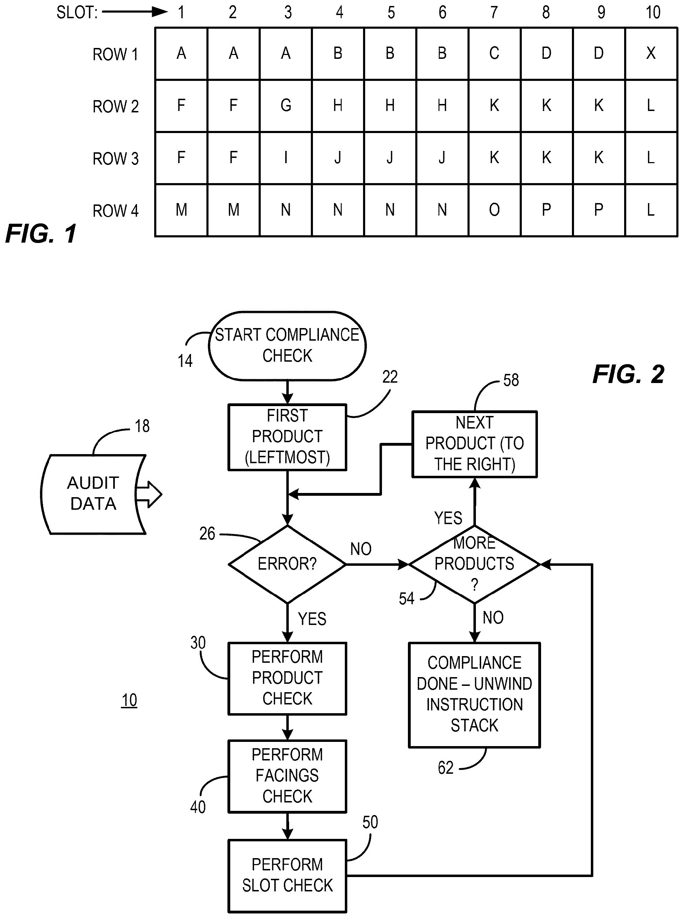

Referring to Figure 1, an example planogram is depicted as an array of slots (1-10) arranged in four rows of shelves (row 1 through row 4). Products are represented by letters for ease of representation (A through P). A single row (row 1) is used as an example throughout this document. The term 'facing' is used to mean a product at the front of a slot on a shelf. So, if a product 'A' occupies three slots (1, 2 and 3) of row 1, then product A has three 'facings', without regard for how many products might be in the slot behind the product at the front of the shelf (where it "faces" the consumer).

The present "Detect and Direct" Compliance System creates an instruction stack, based on iterating thru the errors found in the audit. The system creates "directions" as it traverses the errors. Once it has addressed all the errors, assignments are created and are primarily performed in a "first-in-last-out" stack manner (The exception to this is upon a "slot shift right". In this case, the assignment will follow a "last-in-first-out" stack manner as will be discussed later.) In certain embodiments, the system utilizes speech synthesis and voice recognition to first issue instructions (one by one) to a worker from the instruction stack in the form of synthesized speech instructions. The worker may acknowledge completion of the instruction using speech or other input to the system. The worker may also interact with the system using speech to, for example, request the instruction be repeated, etc.

This system and process allows for the collection of planogram store data via voice, scanning/imaging, RFID, or other data collection method and then to process the data to determine differences from what is expected and then to automatically generate a task list that directs the worker via synthesized speech to fix the errors identified.

The process described herein aids in simplifying correction of a display for the worker and improves efficiency and time to compliance with the planograms. It also separates the process into two separate processes (audit followed by directed correction of the display) rather than allowing the worker to attempt to fix the problem while also auditing. The automated identification and assignment issuance removes the need for complete shelf rebuilding thus saving significant time and allowing more planogram throughput and compliance at greater accuracy.

To carry out the overall process, an audit process is carried out in which a worker captures a representation of the product facings that are actually on display. There is an associated planogram that defines the expected or planned placement of the product. A matrix is created with the collected data on the actual product placement and the audit data are put into the same format as the planogram so as to simplify conducting a one-to-one comparison of each slot in the audit data with the expected data from the planogram. In the present example implementation, both the planogram and the audit data are in matrices so that the audit data can be readily compared to the expected data in the matrix corresponding to the planogram. When the comparison is made, a set of system directed tasks is generated to correct any identified differences between the audit data and the planogram. These tasks may be provided to the worker by speech commands to effect rearrangement of the display to be in compliance with the planogram.

In the method of the present invention and an audit system for product displays, that can be used for example where the product display consists of shelves and slots, comprises a data capture module, an indicia reader or an imager with an image processing module, a database of product identifiers, a location module for providing location information, at least one processor configured to: capture data from the original product display with the data capture module, identify product items from the captured data, combine the captured data with the location information to create an audit data record, by identifying a shelf and slot location for each product item, compare the audit with an associated planogram that defines the expected or planned placement of the product items. The process may then proceed as below, see also Figure 2.

In the discussion that follows, the variable "X" is used as a symbol for the instruction number (i.e., a counter) for instructions that are placed in an instruction stack. As discussed below, a stack of instructions is built (e.g., from number 0 to 10). When the instruction stack is unwound to produce the series of instructions for use by the worker, the instructions are ordered from highest to lowest number (e.g., from 10 down to 0). Thus, x+1 is an incrementing of the instruction number in the stack. Similarly, x-1 indicates that an instruction is being injected below the current number.

Referring now to Figure 2, a compliance checking process consistent with the present teachings is depicted as process 10 starting at 14. This process is invoked after the audit process, which as described above, collects data that describe actual product placement in a display and places that data into the same format (e.g., a matrix) used to represent the planogram for the display in question. This audit process produces audit data 18 that is available to process 10 and processes invoked by process 10. Process 10 describes operation of a single row of product such as row 1 as described previously, but those skilled in the art will appreciate upon consideration of the present teachings that the process can be iterated for each of multiple rows of a display.

The audit creates an audit data record for each product that will contain the Row/Shelf (vertical index), relative order of product on Row/Shelf (horizontal index), its possible facings (available slots), and its actual facings (slots that contain product). The available (possible) facings are used to determine the relative position index of each product on the shelf. For example, the first product can have position 0. If this product has 5 possible facings, the next product has a relative position of 5 on the row/shelf. The available (possible) facings are also used to identify a gap (empty) when this number is greater than the actual facings.

All of this data is used as described above to construct a matrix. The system compares this matrix to the expected matrix constructed from the expected row, order, position, and facings from the planogram. The process described herein compares the indices to identify the following scenarios: too many facings, too few facings, product shifted left, product shifted right, wrong product, and misplaced product.

Example: Indices [Row, Relative Position from Left End, Possible Facing, Actual Facing] in which the relative position is found by adding the previous product's "possible facings". For the expected matrix, the possible and actual should be the same number (if no empty slots in the expected planogram).

### Expected from Planogram [Row 3, Position or Slot 7, Possible 1, Actual 1]

### Recorded in Workflow [Row 3, Position or Slot 6, Possible 2, Actual 1]

Process determines: Product was shifted one position to the left.

A new system directed task is generated to correct any identified error in compliance with the planogram. In this case, the task will include moving this product one slot to the right. This task can then be conveyed to the user via displayed or speech directions.

The process 10 of Figure 2 begins with a first product in a row. In keeping with a left to right processing convention, the process starts at 22 with selection of the leftmost process, but a right-to-left, or up-down convention could equivalently be adopted without departing from the present teachings. At this point, a comparison is made at 26 between the audit data for the first product and its corresponding planogram data to determine if there is an error (a missing product or the wrong product).

If an error is found at 26, the process proceeds to 30, where a product check is performed to find an unknown or missing product, as will be described in greater detail later. The product check at 30 is followed by a facings check 40 that checks available vs. actual slots (quantities) to determine if there a gap. This process 40 is also described later, but in general the process makes a comparison of the quantities of actual facings with the quantity of available slots (not actual quantity of products).

After the facing check 40, a slot check 50 is carried out to determine if products should be shifted left or right. This process 50 will also be discussed in greater detail later.

During the product check 30, the facing check 40 and the slot check 50, the instruction stack is created. This stack represents a set of stored instructions that can be generated to provide a worker with a set of step-by-step instructions for manipulation of the display to bring it into compliance with the planogram - usually without need to remove all products and rebuild the display. This is referred to herein as "unwinding" the instruction stack. That is, an information stack is first built. When all instructions are on the stack (all products have been processed), the stack is executed using "first-in-last-out" stack execution.

When the slot check 50 is completed, the process moves to 54 where a determination is made as to whether or not there are further products to process (after the leftmost product in the first iteration). If so, the product under examination is incremented to the right at 58 and the process returns to 26 for another round of processing.

The process 10 iterates like this until all of the products in the row being examined are processed. At this point, the conclusion at 54 is that there are no more products and the process proceeds to 62 where the compliance check is complete. At this point, the instruction stack can be "unwound" to provide output to the user of an ordered sequence of instructions that can be followed to correct any errors in the actual display and bring the display into compliance with the planogram. This can be done using speech synthesis to generate a sequence of verbal commands for the worker, or the instructions can be displayed on a display or printed out without limitation.

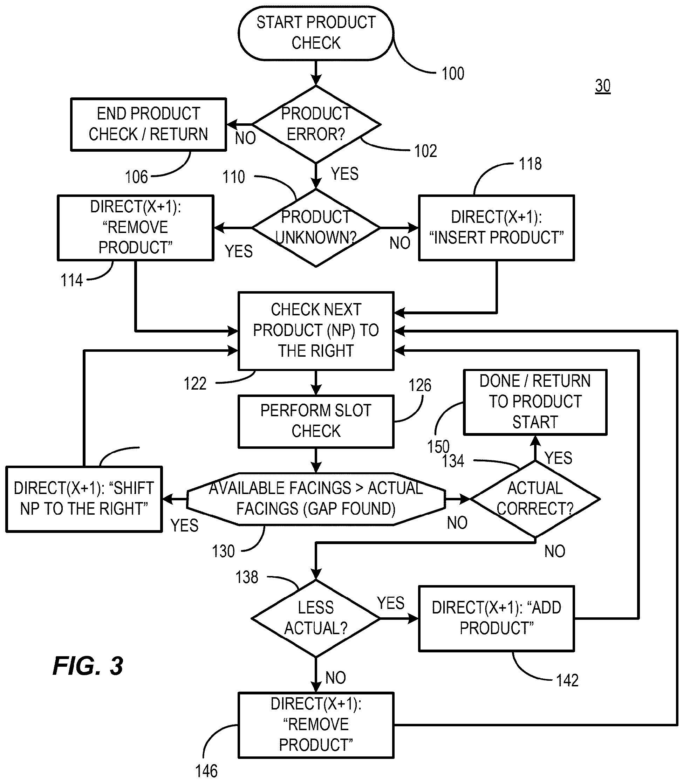

The product check 30 as mentioned above is depicted in greater detail in Figure 3 starting at 100, after which a determination is made as to whether or not there is a product error in the current position at 102. In the case where there is no error, the process is completed at 106 and the process returns. But, if there is a product error at the current slot, the process proceeds to 110 where the process determines if the product is unknown. If the product is unknown at 110, the process generates an instruction at 114 for the instruction stack at the next position (x+1) in the stack which directs the worker to "remove the product" at the current slot location. If the product is not unknown at 110, the process generates an instruction for the instruction stack at (x+1) for the user to "insert product" at 118. An error for the product is either "unknown" or "not found" (i.e. missing). So if you receive a product error and it is not "unknown", it is the "not found" or missing. Hence, the worker is directed to insert the missing product.

In either case of 114 or 118, the process proceeds to the next product (NP) on the right at 122 and calls the slot check process (to be discussed later) at 126. At 130, the process determines if the number of available facings (possible facings) is greater than the number of actual facings (indicating that a gap has been found). If so, the process proceeds to 134 where an instruction is generated for position (x+1) to "shift next product to the right" after which the process returns to 122. But if the number of available facings is not greater than the number of actual facings at 130, the process determines if the actual is correct at 134 and if not, the process proceeds to 138 to determine if there are less actual facings than available facings. If so at 142, the process generates an instruction at (x+1) to "add product" and the instruction is place on the instruction stack. If not at 146 the process generates an instruction for the instruction stack at (x+1) to "remove product". In either case, the process proceeds to 122 from either 142 or 146.

This process continues until the actual is correct at 134 at which point the process is done at 150 and returns to the product start.

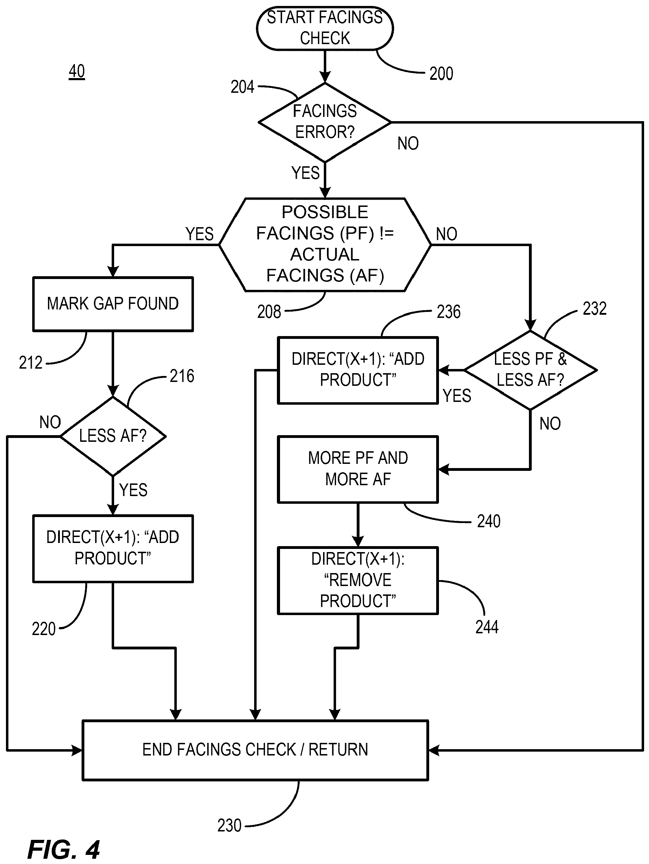

Figure 4 depicts the facings check process 40 starting at 200. As noted earlier, facings check 40 checks the number of available slots as compared to the number of actual slots to determine if a gap in product facings exists. At 204, the process determines if a facing error has occurred. If so, the process proceeds to 208 where the number of available (possible) facings is not equal to the number of actual facings. If they are not equal, the process knows at 212 that a gap is found and it is noted or marked. If there are less actual facings at 216, the process creates an instruction at x+1 to "add product". The facings check process then ends at 230 and returns. If at 216 there are not less actual facings, the process proceeds directly to 230.

If no facings error was determined at 204, the process proceeds directly to 230. But if a facings error is determined at 204 and the number of possible facings (PF) does equal the number of actual facings (AF) at 208, then the process checks at 232 whether there are less possible facings and less actual facings. If so, then the process proceeds to 236 where an instruction is generated at x+1 to "add product" and then the process proceeds to 230. If there are not less possible facings and less actual facings at 232, the process concludes that there are more possible facings and more actual facings. The process then creates an instruction at x+1 to "remove product" and the process proceeds to 230 and returns.

The slot check process 50 is depicted in flow chart 50 starting at 400 after which the process determines if there is a slot error at 202, and if so, then at 206 the process determines if there is a slot shift to the right. If not, then the slot shift is concluded to be left at 210. At 214 an instruction is generated at x+1 to "shift product right". The slot check process then ends at 220 and returns. If the slot shift is right at 206, the process proceeds to 224 where an instruction is created and inserted at x-1 to "shift product left". The process then returns at 220. In the event there is no slot error at 202, the process proceeds directly to 220 to end the slot check process and return.

As discussed in connection with Figure 2, the process creates an ordered stack of instructions that are used to correct errors in the product display and bring the display into compliance with the planogram. When the process is complete, the instruction stack is unwound and presented to a worker to make the adjustments as detailed in the instruction.

Also as discussed in connection with Figure 2, the process 10 (and 30, 40 and 50) utilizes audit data 18 to carry out the processes described. During the audit process, the system characterizes the actual product facings in a physical display so they can be compared with the planogram for the particular display. The definition of the errors found in the audit, i.e. during the collection of the actual planogram data is as follows including a high level description of the decision tree in the audit logic and the corresponding error identified. These terms are used in the error tables of the examples provided later in this document:

### AUDIT PROCESS LOGIC

Mark each expected product as "Not Found", and mark each recorded product as "Extra Product"
For each recorded product, check each expected product
If the recorded product matches the expected product
Mark the expected product and the recorded product as "Found"
If the recorded product's slot index is less than the expected product's
Mark the recorded product as "Shifted Left"
Else if the recorded product's slot index is greater than the expected product's
Mark the recorded product as "Shifted Right"
If the recorded product's possible facings is less than the expected product's
Mark the recorded product as "Less Possible Facings"
Else if the recorded product's possible facings is greater than the expected product's
Mark the recorded product as "More Possible Facings"
If the recorded product's actual facings is less than the expected product's
Mark the recorded product as "Less Actual Facings"
Else if the recorded product's actual facings is greater than the expected product's
Mark the recorded product as "More Actual Facings"

### COMPLIANCE PROCESS EXAMPLES

The present system creates an instruction stack as discussed above, based on iterating thru the errors found in the audit. Thus, the system creates a set of "directions" as it traverses the errors. Once it has addressed all the errors, assignments are created and are primarily performed in a "first-in-last-out" stack manner. The exception to this is upon a "slot shift right". In this case, the assignment will be performed in a "last-in-first-out" stack manner. Below there are 11 example scenarios depicted. Audit Output data tables developed from the logic above. Using the Audit output data as input to the flow charts above, the logic behind the compliance system is not only illustrated, but the corresponding results are achieved/verified.

The expected configuration is the "expected" data for a display from the Planogram. For example:

| | | | | | | | | | |
|---|---|---|---|---|---|---|---|---|---|
| 1 | 2 | 3 | 4 | 5 | 6 | 7 | 8 | 9 | 10 |
| A | A | A | B | B | B | C | D | D | - |

This is encoded as:

| Product | Row | Relative Order | Slot Index | Possible Facings | Actual Facings | Error |
|---|---|---|---|---|---|---|
| A | 1 | 1 | 1 | 3 | 3 | - |
| B | 1 | 2 | 4 | 3 | 3 | - |
| C | 1 | 3 | 7 | 1 | 1 | - |
| D | 1 | 8 | 8 | 2 | 2 | - |

### EXAMPLE 1

The system can detect when all the products are in the correct position.

| | | | | | | | | | |
|---|---|---|---|---|---|---|---|---|---|
| 1 | 2 | 3 | 4 | 5 | 6 | 7 | 8 | 9 | 10 |
| A | A | A | B | B | B | C | D | D | X |

Where x means "don't care".

### Audit Output:

| | | Errors |
|---|---|---|
| A | [Found] | None |
| B | [Found] | None |
| C | [Found] | None |
| D | [Found] | None |

### EXAMPLE 2

The system can also detect when a product has less actual facings.

| | | | | | | | | | |
|---|---|---|---|---|---|---|---|---|---|
| 1 | 2 | 3 | 4 | 5 | 6 | 7 | 8 | 9 | 10 |
| A | A | A | B | B | - | C | D | D | X |

### Audit process annotates:

| | | Errors |
|---|---|---|
| A | [Found] | None |
| B | [Found] | [Less Actual Facings] |
| C | [Found] | None |
| D | [Found] | None |

### Compliance process detects:

Product A => [No Product Error][No Shift Error][ No Facings Error]
Product B => [No Product Error][No Shift Error][ Facings Error]
[Possible Facings > Actual Facings of Product B][Less Actual Facings] [Add Product B in gap]
[Check Product to the Right]
[No Product Error] [No Shift Error] [No Facings Error][No Action for Product C]

### {No Remaining Errors}

### Compliance process directs:

Locate Product B (e.g., identified by UPC code). Add Product B in empty slot.

### EXAMPLE 3

The system can detect when multiple products have less actual facings.

| | | | | | | | | | |
|---|---|---|---|---|---|---|---|---|---|
| 1 | 2 | 3 | 4 | 5 | 6 | 7 | 8 | 9 | 10 |
| A | A | A | B | B | - | C | D | - | X |

| | | Errors |
|---|---|---|
| A | [Found] | None |
| B | [Found] | [Less Actual Facings] |
| C | [Found] | None |
| D | [Found] | [Less Actual Facings] |

### Compliance process detects:

Product A => [No Product Error][No Shift Error][ No Facings Error]
Product B => [No Product Error][No Shift Error][ Facings Error]
[Possible Facings > Actual Facings of Product B][Less Facings] [Add Product B in gap]
[Check Product to the Right]
[No Product Error] [No Shift Error][No Facings Error][No Action for Product C]
Product D => [No Product Error][No Shift Error][ Facings Error]
[Possible Facings > Actual Facings of Product D][Less Actual Facings] [Add Product D in gap]

### {No Remaining Errors}

### Compliance process directs:

Locate Product B (UPC). Add Product B in empty slot.
Locate Product D (UPC). Add Product D in empty slot.

### EXAMPLE 4

The system can detect when a product has less actual facings, and its neighboring product has shifted left.

| | | | | | | | | | |
|---|---|---|---|---|---|---|---|---|---|
| 1 | 2 | 3 | 4 | 5 | 6 | 7 | 8 | 9 | 10 |
| A | A | A | B | B | C | - | D | D | X |

| | | Errors |
|---|---|---|
| A | [Found] | None |
| B | [Found] | [Less Possible Facings][Less Actual Facings] |
| C | [Found] | [Slot Shift Left][More Possible Facings] |
| D | [Found] | None |

### Compliance process detects:

Product A => [No Product Error][No Shift Error][No Facings Error]
Product B => [No Product Error][No Shift Error][Facings Error]
[Less Possible Facings == Less Actual Facings of Product B] [Add Product B]
[Check Product to the Right]
[Slot Shift Left][Shift Product C right] [More Possible Facings]
[Check Product to the Right]
Product D => [No Product Error][No Shift Error][No Facings Error]

### {No Remaining Errors}

### Compliance process directs:

Locate Product C (UPC). Shift Product C right to be adjacent to Product D.
Locate Product B (UPC). Add Product B in empty slot.

### EXAMPLE 5

The system can detect when a product has less actual facings, and all of its neighboring products have shifted left.

| 1 | 2 | 3 | 4 | 5 | 6 | 7 | 8 | 9 | 10 |
|---|---|---|---|---|---|---|---|---|---|
| A | A | A | B | B | C | D | D | - | x |

| | | Errors |
|---|---|---|
| A | [Found] | None |
| B | [Found] | [Less Possible Facings][Less Actual Facings] |
| C | [Found] | [Slot Shift Left] |
| D | [Found] | [More Possible Facings][Slot Shift Left] |

### Compliance process detects:

Product A => [No Product Error] [No Shift Error] [No Facings Error]
Product B => [No Product Error][No Shift Error][Facings Error]
[Less Possible Facings == Less Actual Facings of Product B] [Add Product B]
[Check Product to the Right]
[Slot Shift Left] [Shift Product right C] [More Possible Facings - NO]
[Check Product to the Right]
Product D => [No Product Error][Shift Error][Facings Error]
[Slot Shift Left] [Shift Product D right*][More Possible Facings]
[Check Product to the Right] (last product)

### {No Remaining Errors}

### Compliance process directs:

Locate Product D (UPC). Shift Product D right to the end of the shelf.
Locate Product C (UPC). Shift Product C right to be adjacent to Product D.
Locate Product B (UPC). Add Product B in empty slot.

### EXAMPLE 6

The system can detect when a product has less actual facings, and its neighboring product has shifted right.

| 1 | 2 | 3 | 4 | 5 | 6 | 7 | 8 | 9 | 10 |
|---|---|---|---|---|---|---|---|---|---|
| A | A | A | B | B | B | - | C | D | x |

| | | Errors |
|---|---|---|
| A | [Found] | None |
| B | [Found] | [More Possible Facings] |
| C | [Found] | [Slot Shift Right] |
| D | [Found] | [Less Possible Facings][Less Actual Facings][Slot Shift Right] |

### Compliance process detects:

Product A => [No Product Error] [No Shift Error] [No Facings Error]
Product B => [No Product Error][No Shift Error][Facings Error]
[Possible Facings != Actual Facings of Product B] Actual Correct[More Possible Facings Error] [There is a gap]
[Check Product to the Right]
Product C => [No Product Error] [Shift Error] [No Facings Error]
[Slot Shift Right] [Shift Product C left] [Actual Facings Error - NO]
Check Product to the Right]
Product D => [No Product Error][Shift Error][Facings Error]
[Less Possible Facings == Less Actual Facings of Product D][Slot Shift Right][Shift Product D left][Add Product D in empty slot.

### {No Remaining Errors}

### Compliance process directs:

Locate Product C (UPC). Shift Product C left.
Locate Product D (UPC). Shift Product D left to be adjacent to Product C.
Locate Product D (UPC). Add Product D in empty slot.

### EXAMPLE 7

The system can detect when a product is missing.

| 1 | 2 | 3 | 4 | 5 | 6 | 7 | 8 | 9 | 10 |
|---|---|---|---|---|---|---|---|---|---|
| - | - | - | B | B | B | C | D | D | x |

| | | Errors |
|---|---|---|
| A | [Not Found] | None |
| B | [Found] | [More Possible Facings] |
| C | [Found] | None |
| D | [Found] | None |

### Compliance process detects:

Product A => [Product Error][No Shift Error][No Facings Error]
[Product Not Found]
[Check Product to the Right]
Product B => [No Product Error] [No Shift Error] [Facings Error]
[Possible Facings != Actual Facings]Actual Correct [More Possible Facings] [Product B includes a gap, shift right]
[Check Product to the Right]
Product C => [No Product Error][No Shift Error][No Facings Error]
[Add Product A] [Create new matrix with A added, adjust parameters, and recheck]

### {No Remaining Errors}

| 1 | 2 | 3 | 4 | 5 | 6 | 7 | 8 | 9 | 10 |
|---|---|---|---|---|---|---|---|---|---|
| A | A | A | B | B | B | C | D | D | x |

| | | Errors |
|---|---|---|
| A | [Not Found] | None |
| B | [Found] | None |
| C | [Found] | None |
| D | [Found] | None |

### Compliance process directs:

Locate Product B (UPC). Shift Product B right to be adjacent to Product C.
Locate Product A (UPC). Add Product A in empty slot.

### EXAMPLE 8

The system can detect when a product is missing, and its neighboring product is shifted left.

| 1 | 2 | 3 | 4 | 5 | 6 | 7 | 8 | 9 | 10 |
|---|---|---|---|---|---|---|---|---|---|
| - | - | B | B | B | C | D | D | X | X |

| | | Errors |
|---|---|---|
| A | [Not Found] | None |
| B | [Found] | [More Possible Facings] |
| C | [Found] | [Slot Shift Left] |
| D | [Found] | [Slot Shift Left] |

### Compliance process detects:

Product A => [Product Error][No Shift Error][No Facings Error]
[Product Not Found]
[Check Product to the Right]
Product B => [No Product Error][No Shift Error][Facings Error]
[Possible Facings != Actual Facings]Actual Correct [More Possible Facings] [Product B includes a gap, shift right]
[Check Product to the Right]
Product C => [No Product Error][Shift Error][No Facings Error]
[Possible Facings == Actual Facings of Product C][Slot Shift Left][Shift Product C right]
[Check Product to the Right]
Product D => [No Product Error] [Shift Error] [No Facings Error]
[Possible Facings == Actual Facings of Product D][Slot Shift Left][Shift Product D right]

[Add Product A] [Create new matrix with A added, adjust parameters, and recheck]

### {No Remaining Errors}

### Compliance process directs:

Locate Product D (UPC). Shift Product D right to the end of the shelf.
Locate Product C (UPC). Shift Product C right to be adjacent to Product D.
Locate Product B (UPC). Shift Product B right to be adjacent to Product C.
Locate Product A (UPC). Add Product A in the empty slot.

### EXAMPLE 9

The system can detect when a product has been replaced by an unknown product.

| 1 | 2 | 3 | 4 | 5 | 6 | 7 | 8 | 9 | 10 |
|---|---|---|---|---|---|---|---|---|---|
| A | A | A | B | B | E | C | D | D | X |

| | | Errors |
|---|---|---|
| A | [Found] | None |
| B | [Found] | [Less Possible Facings][Less Actual Facings] |
| C | [Found] | None |
| D | [Found] | None |
| E | | [Extra Product] |

### Compliance process detects:

Product A => [No Product Error][No Shift Error][No Facings Error]
Product B => [No Product Error][No Shift Error][Facings Error]
[Less Possible Facings == Less Actual Facings][Less Actual Facings] [Add Product B]
[Check Product to the Right]
Product E => [Product Error][No Shift Error][No Facings Error][Remove Product E]
[Check Product to the Right]
Product C => [No Product Error][No Shift Error][No Facings Error]

### {No Remaining Errors}

### Compliance process directs:

Locate Product E (UPC). Remove Product E.
Locate Product B (UPC). Add Product B in empty slot.

### EXAMPLE 10

The system can detect when a product has too many actual facings.

| 1 | 2 | 3 | 4 | 5 | 6 | 7 | 8 | 9 | 10 |
|---|---|---|---|---|---|---|---|---|---|
| A | A | A | A | B | B | B | C | D | D |

| | | Errors |
|---|---|---|
| A | [Found] | [More Possible Facings][More Actual Facings] |
| B | [Found] | [Slot Shift Right] |
| C | [Found] | [Slot Shift Right] |
| D | [Found] | [Slot Shift Right] |

### Compliance process detects:

Product A => [No Product Error][No Shift Error][Facings Error]
[More Possible Facings == More Actual Facings of Product A] [More Actual Facings] [Remove last Product A]

[Check Product to the Right]
[Slot Shift Right][Shift Product B left]
[Check Product to the Right]
[Slot Shift Right][Shift Product C left]
[Check Product to the Right]
[Slot Shift Right][Shift Product D left]

### {No Remaining Errors}

### Compliance process directs:

Locate Product A (UPC). Remove last slot of Product A.
Locate Product B (UPC). Shift Product B left to be adjacent to Product A.
Locate Product C (UPC). Shift Product C left to be adjacent to Product B.
Locate Product D (UPC). Shift Product D left to be adjacent to Product C.

### EXAMPLE 11

The system can detect when a product has too many actual facings.

| 1 | 2 | 3 | 4 | 5 | 6 | 7 | 8 | 9 | 10 |
|---|---|---|---|---|---|---|---|---|---|
| A | A | A | B | B | B | B | C | D | D |

| | | Errors |
|---|---|---|
| A | [Found] | None |
| B | [Found] | [More Possible Facings][More Actual Facings] |
| C | [Found] | [Slot Shift Right] |
| D | [Found] | [Slot Shift Right] |

### Compliance process detects:

Product A => [No Product Error][No Shift Error][No Facings Error]
Product B => [No Product Error] [No Shift Error] [Facings Error]
[More Possible Facings == More Actual Facings of Product B] [More Actual Facings] [Remove last Product B]

[Check Product to the Right]
[Slot Shift Right][Shift Product C left]
[Check Product to the Right]
[Slot Shift Right][Shift Product D left]

### {No Remaining Errors}

### Compliance process directs:

Locate Product B (UPC). Remove last slot of Product B.
Locate Product C (UPC). Shift Product C left to be adjacent to Product B.
Locate Product D (UPC). Shift Product D left to be adjacent to Product C.

### SYSTEM

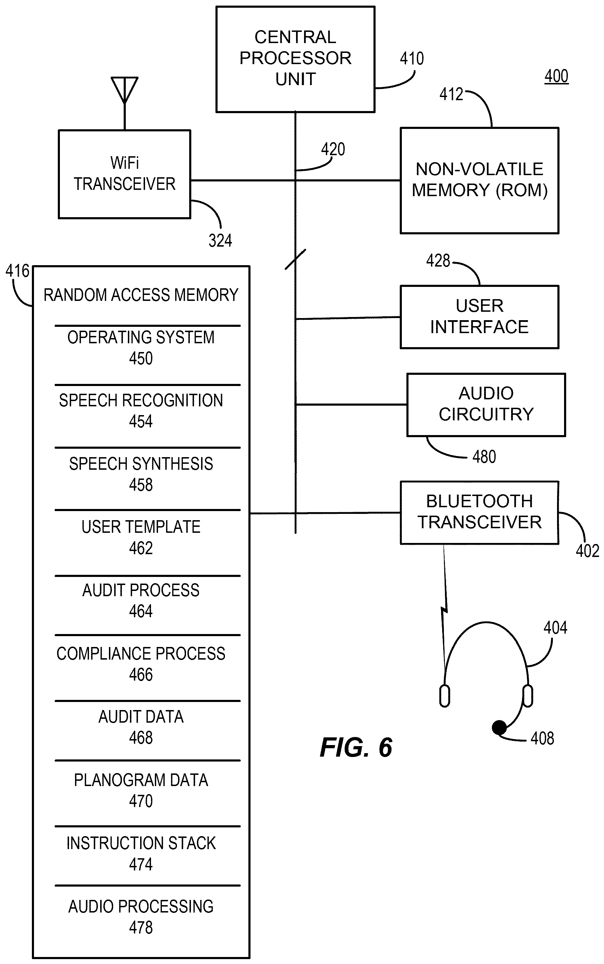

Figure 6 depicts an example of a functional block diagram of an example of a portable wireless terminal 400 that can be used to carry out the processes described. The processing can be carried out in the terminal or in a host computer coupled to the terminal via a wireless connection (for example), or any combination thereof. The terminal 400 is coupled via a Bluetooth transceiver or other wireless or wired transceiver 402 to a paired headset 404 with microphone 408. The terminal 400 includes one or more processor units (e.g., a CPU) 410 having associated non-volatile memory 412 and Random Access Memory (RAM) 316 via one or more bus connections 420. The bus 420 may be further connected to a WiFi transceiver 424 for communication with a wireless network. A user interface 428 is also provided which may include a variety of user controls and displays as is appropriate to the device.

The functions discussed above are carried out by processor 410 (alone or in cooperation with a server or host computer) utilizing programming stored in the memory 412 and 416. In this example, particular functional modules are depicted at RAM 416 that represents various functions discussed. Operating system 450 carries out the functions normally associated with an operating system (e.g., Linux or Android). A speech recognition module 454 can be used to carry out speech processing to convert speech received via the microphone 408 to a message understood by the terminal 400.

The speech synthesis module 458 generates synthesized speech that is conveyed to the user via headset 404 for providing the worker with synthesized speech instructions from the instruction stack. The user template 462 provides information that is used by speech recognition module 454 to improve the accuracy of recognition of speech by a particular user. The audit process described above is stored as instruction at 464 and the compliance "detect and correct" process discussed above is stored as instructions at 466. The output of the audit process 464 is stored as audit data 468 and the planogram data are stored at 470. The instruction stack discussed above is stored as data at 474 for use as described to provide instructions for correction of the display.

The instruction stack can be unwound into instructions that are used to generate synthesized speech directives that are output using audio circuits 480 to ultimately provide the speech directives one by one to the worker via the headset 404. The speech recognition, if used, may be implemented as a hardware module or as a processor utilizing speech recognition processes defined by 454 which may be used to process verbal commands from the worker to acknowledge instructions or to provide input during the audit process, etc. Many variations are possible without departing from the present teachings.

In the specification and/or figures, typical embodiments of the invention have been disclosed. The present invention is not limited to such exemplary embodiments. The use of the term "and/or" includes any and all combinations of one or more of the associated listed items. The figures are schematic representations and so are not necessarily drawn to scale. Unless otherwise noted, specific terms have been used in a generic and descriptive sense and not for purposes of limitation. Pantone® colour references are an example of a widely used colour reference chart system used as a reference in product packaging so as to avoid subjective judgements as to colour matching. Other equivalent industry standard systems may be used.

## Claims

1. A method for implementing or assisting in the implementation of a planogram of product placement for providing a shelf facing representing that planogram, wherein the method comprises the steps of:
a. providing a processing system, such as a computer, the processing system being configures to carry out in whole or part the steps of:
b. obtaining a planogram, and auditing a display arrangement to generate actual product placement data representing actual product placement in the display arrangement;
c. comparing the actual product placement data with planned product placement as defined in a planogram;
d. creating a set of one or more instructions for rearrangement of the actual product placement to bring the actual product placement in the display arrangement into compliance with the planned product placement as defined in the planogram; and
e. outputting the set of instructions.

2. The method according to claim 1, wherein the outputting of the set of instructions comprises generating synthesized speech instructions.

3. The method according to claim 1 or claim 2, wherein the outputting of the set of instructions comprises generating a visual display.

4. The method of any preceding claim wherein at least one of the instructions comprises an instruction to add product at a specified location in the display arrangement and /or at least one of the instructions comprises an instruction to shift a product at a specified location in the display arrangement to the left or to the right.

5. The method of claim 4 wherein instruction to shift left or right takes precedence over instruction to add or remove product when the actions are alternatives in implementing the planogram

6. The method according to any preceding claim, where the comparing comprises a product check of the audit data to identify unknown or missing products and any unknown or missing products provided in the planogram are compared to a database of product images and said product is replaced by another product with the processor selection of closely visually matching product in the same product category.

7. The method of claim 6 the processor selection of closely visually matching product is based upon a pantone colour reference.

8. The method of any preceding claim comprising the step of obtaining data as to the sales of product on each facing of the Planogram in calculating the number of items necessary to maintain the shelf facing in conformance with the planogram and providing instruction to provide only that number of items for implementation of the planogram, such as including items placed behind the front facing.

9. A planogram implementation system, the system comprising a camera, that is directed or is directable upon the product facings for capturing the image of the actual product placement, the system being configured to capture that image and in conjunction with the planogram data is configured to execute the method of the present invention of any of claim 1 to 9 a periodic basis, the system is then configured to determines when the product facings no longer correspond to the planogram and at that point or at a point where a predetermined plurality of mismatches with the planogram occurs issues sends an instruction to a stock keeping system to provide product to replenish the shelves as necessary and/or to provide instructions to restore the shelf facings to match the planogram.

10. The system of claim 9 wherein an alert that product is available and the instructions are available for execution when indicia of activity in the store falls below a given threshold.

11. The system of claim 9 or claim 10 wherein instruction to a stock keeping system to provide product to replenish the shelves comprises an automated product picking procedure to provide a product compilation suitable for refreshing the planogram implementation.

12. The system of any preceding system claim wherein the system comprises a mobile unit configured to traverse the aisles of a store and to sequentially capture images of the actual product placements, and compare actual product facing with a plurality of planograms and to compile the instructions to restore the shelf facings to match the planogram for a plurality of planograms.
